# EUROPEAN PATENT APPLICATION

(11) **EP 1 574 126 A1**
(43) Date of publication of application: **14.09.2005**
(21) Application number: 04425170.0
(22) Date of filing: 12.03.2004
(51) Int. Cl.: A01G 7/04

(54) **Integrated system for the irradiation of photosynthetic organism, in particular plants, with multichromatic light**

(71) Applicant: C.R.F. Società Consortile per Azioni, 10043 Orbassano (TO) (IT)
(72) Inventor: Maffei, Massimo, 10020 Cambiano (Torino) (IT); Perlo, Pietro, 10043 Orbassano (Torino) (IT); Li Pira, Nello, 10043 Orbassano (Torino) (IT); Sinesi, Sabino, 33020 Amaro (Udine) (IT)
(74) Representative: Quinterno, Giuseppe

(57) **Abstract**

The system comprises an array of modular radiant units (3), each of which comprises a corresponding supporting substrate (10), at least one light emitting unit (20; 21, 22) comprising at least one first and one second emitter (20; 21, 22) capable of emitting light having a predetermined first and second wavelength respectively and an optical device (30) associated with such a light emitting unit (20; 21, 22) capable of imparting a predetermined spatial distribution characteristic to the emitted radiation.

The substrate (10) has mechanical and electrical interconnection devices (11) to permit them to be mechanically coupled to the substrates (10) of a plurality of other similar radiant units (3).

The system (1) also comprises a control and adjustment unit (ECU) capable of controlling the light emitters (20; 21, 22) in such a way as to vary the flow characteristics of the light emitted by the said first and second emitters (20; 21, 22) in predetermined ways according to the values adopted by predetermined environmental parameters and time.

## Description

This invention relates to an integrated system for the irradiation of photosynthetic organisms, in particular plants, with multichromatic light, in particular dichromatic light.

Plants and all photosynthetic organisms need light for their development and growth. Light is an essential factor in rendering them autotrophic, that is in a position to use inorganic materials in order to convert them into organic substances.

The typical process involved in the conversion of carbon dioxide to organic matter is chlorophyll-mediated photosynthesis. This process takes place through biochemical reactions, with the transfer of energy, and makes it possible to convert the radiant energy of the light into metabolic energy.

The pigments responsible for the absorption of light in plants are of various kinds, and substantially cover the entire absorption spectrum of the said photosynthetically active radiation (PAR), which extends from approximately 400 to approximately 800 nanometres.

The main pigments involved are type a chlorophyll, type b chlorophyll, carotenoids and xanthophylls. Type a and b chlorophylls are directly involved in the photosynthetic process. The other pigments have accessory roles.

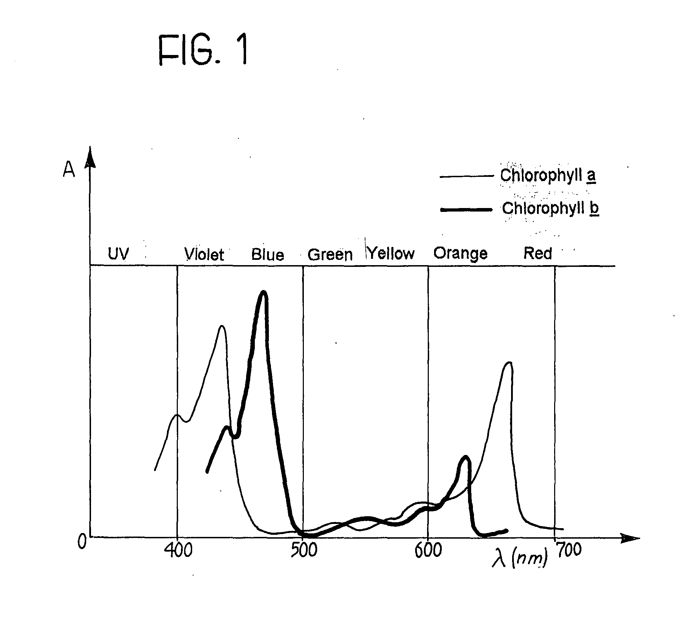

The radiation absorption spectra of chlorophylls a and b are illustrated qualitatively in Figure 1. In this figure it will be noted that the two chlorophylls absorb sunlight in the blue and red regions separately. The almost complete absence of absorption in the spectral region corresponding to the green light, from which the typical green colour of chlorophyll, and therefore leaves, derives, is also obvious.

As a consequence of the characteristics chlorophyll's absorption spectrum it is possible/necessary to provide photosynthetic organisms (plants, algae, mosses, etc.) with light in the red and blue spectral areas, while it is virtually pointless to provide light in the green spectral area.

In relatively recent times the above considerations have led many researchers to investigate the effects of monochromatic types of light, obtained by filtering polychromatic light, or by generating essentially monochromatic light beams, on the growth and development of plants.

Of the most promising of known solutions the one which currently offers the best quality/price and yield/performance ratio uses light emitting diodes (LED). LEDs represent an artificial source of light which is ideal for an extensive range of applications from use in controlled growth chambers for plants and/or algae, back-up lighting for glasshouses, incorporation in domestic systems for plant growth in low light environments, the in-vitro cultivation of micropropagated plants, as well as applications in the space field such as the glasshouse growing of crops on life-support space vehicles or future planetary or satellite settlements.

Because of their small size, their low weight and their low consumption, the highly specific chromatic of the emitted light and their long service life ("lifetime"), LEDs make it possible to produce integrated systems which can be remotely controlled by operating procedures which ensure a long service life, a low need for maintenance and extreme ease of action in the event of any substitution. Their monitoring can also be easily automated.

Another advantage of LEDs lies in the substantially invarying nature of the properties of the light generated, even at low emission levels, unlike what is possible with conventional filament lamps or gas-filled incandescent lamps. Finally, for reliability and length of service LEDs represent an optimal solution for use in an extensive range of both working and research environments, as well as environments of the domestic type.

A process and equipment for the irradiation of plants using light emitting diodes are described for example in US patent no. 5,012,609.

Selective absorption by plants in the blue and red spectral bands is a scientifically demonstrated fact and has been mentioned in a plurality of publications (see, for example: Rabinowitch, E.I. (1953), Photosynthez, Vol. II, part 1, Izdatelstvo Inostrannoi Literaturi, Moscow, p. 385: Translation from: E.I. Rabinowitch, "Photosynthesis and Related Processes", Vol. II, Part 1, Interscience Publ., New York, 1951; Furuya, M., Inoue, Y. (1994) "Instrumentation in photomorphogenesis research", in: Photomorphogenesis in plants (Kendrick, R.E. and Kronemberg, G.H.M., Eds), pages 29-47, Kluwer, Dordrecht; Zeinalov, Y., Maslenkova, L. (2000), "On the action spectra of photosynthesis and spectral dependence of the quantum efficiency", Bulg. J. Plant Physiol., 26: 58-69.

In this respect the Beltsville spectrographic experiment, when in 1945 Hendricks and his colleages demonstrated how plants respond differently to blue light and red light, using an arc lamp and a prism, is famous (Parker, M.W., Hendricks, S.B., Borthwick, H.A., Scully, N.J. (1945), "Action spectrum for the photoperiodic control of floral initiation in *Biloxi* soybean", Science 02: 152-155; Borthwick, H.A., Hendricks, S.B., Parker, M.W, Toole, E.H., Toole, V.K. (1952), "A reversible photoreaction controlling seed germination", Proc. Natl. Acad. Sci. USA, 38: 662-666).

The use of fluorescent sources, using phosphors which convert ultraviolet light into predominantly blue and red light, or the use of dichromatic LED emitters appears to be an immediate consequence of what is mentioned in the abovementioned literature.

One object of this invention is to provide an integrated system of the improved type for the irradiation of plants with dichromatic light.

This and other objects will be accomplished according to the invention through a system whose essential features are defined in appended Claim 1.

Further features and advantages of the invention will appear from the detailed description which follows, provided purely by way of a non-restrictive example, with reference to the appended drawings, in which:
Figure 1, already described, is a diagram which shows light absorption A by type a and type b chlorophyll as the ordinate, with the change in wavelength λ being shown on the abscissa,
Figure 2 is a perspective view showing a system for the generation of dichromatic light according to this invention,
Figures 3 and 4 are perspective views of modular radiating elements for use in a system according to this invention,
Figures 5 and 6 are diagrammatical views in cross section of other modular radiating elements for use in a system according to the invention,
Figures 7 and 8 are diagrammatical illustrations of two possible configurations of systems according to the invention, and
Figure 9 is an electrical diagram, partly in block form, of a system for the generation of radiant energy according to the invention.

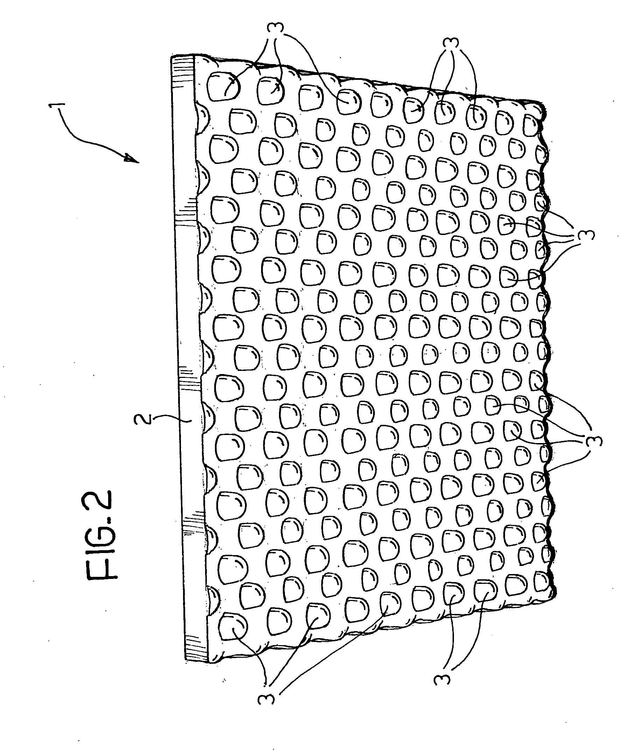

A device or panel for the generation of dichromatic light according to the invention in order to support the development and growth of plants is indicated overall by 1 in Figure 2.

In the embodiment illustrated by way of example, device 1 comprises a supporting structure 2 of essentially quadrangular shape, the bottom surface of which is connected to an orderly two-dimensional array of modular radiating elements 3.

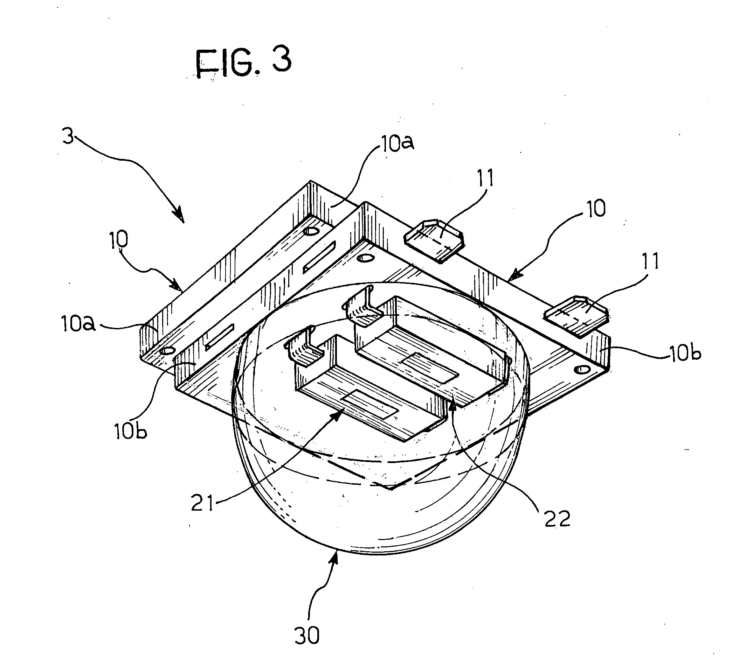

Figure 3 shows an embodiment of a generic modular radiating element 3 which can be used in an irradiation system according to the invention, by way of a non-restrictive example.

In the embodiment illustrated the modular radiating element 3 comprises a supporting substrate 10 to which (at least) two light emitting diodes (LEDs) 21 and 22 are connected.

Supporting substrate 10 may for example be constructed using the technique of multilayer printed circuit plates. In the embodiment illustrated by way of example this essentially comprises two main layers 10a and 10b of an essentially quadrangular shape offset in a diagonal direction in such a way that a pair of contiguous edges or margins in one layer projects with respect to the corresponding pair of contiguous edges or margins in the other.

Substrate 10 of a generic modular radiating element 3 has interconnection means which enable it to connect mechanically to the substrates of a plurality of further radiating elements having similar adjacent arrangements in such a way as to form an orderly arrangement or array of radiating elements. These mechanical interconnecting means may be conveniently provided at the projecting edges of substrate 10 of each radiating element and may comprise one or more of many arrangements which are known per se, such as snap-engaging members, screw connecting members, etc.

Electrical interconnection means such as the flat pins indicated by 11 in Figure 3, which can be connected to matching interconnecting members (not shown) provided in an adjacent modular radiating element are incorporated in one or both of the layers of substrate 10.

A pair of light emitting diodes 21 and 22, placed adjacent to each other, and capable of emitting light having a wavelength of around 470 nm and around 655 nm respectively, with an FWHM (Full Width Half Maximum) preferably equal to approximately 20 nm in each case, is connected to supporting substrate 10.

A single optical device 30 capable of effecting mixing of the radiation emitted by these diodes and imparting a predetermined spatial distribution characteristic to the radiation emitted as a whole is associated with the pair of light emitting diodes 21, 22.

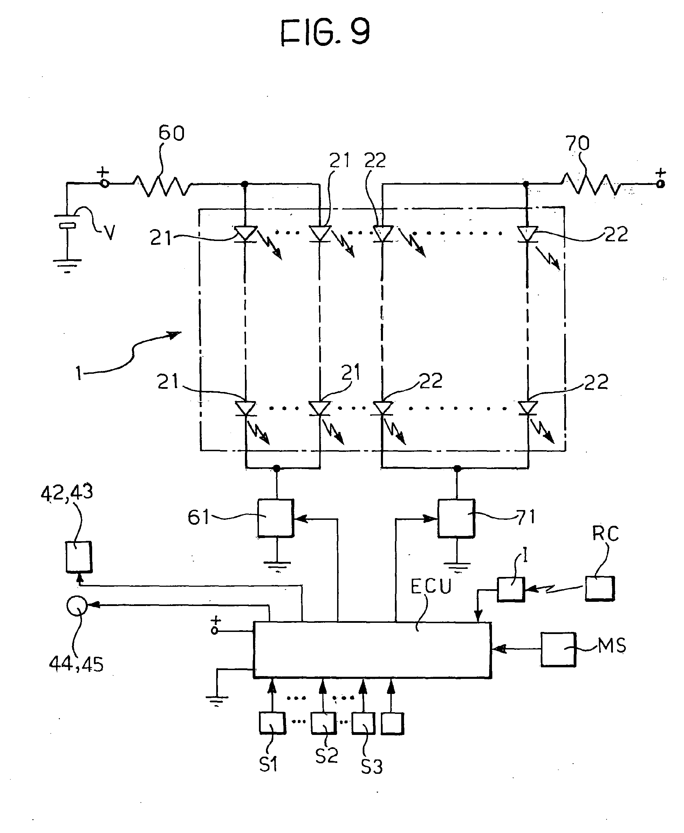

Through the electrical interconnecting means light emitting diodes 21 and 22 carried by substrate 10 can be connected together into an electrical supply and control grid such as that which will be described by way of example below with reference to Figure 9.

Each modular radiating element 3 comprises a corresponding optical device 30 fixed to one surface of the substrate of support 10. This optical device 30, which in the simplest case may consist of a lens, is designed to mix the radiation emitted from diodes 21 and 22 and to impart a predetermined radiation diagram, or a predetermined spatial distribution characteristic, upon the radiation emitted as a whole.

Conveniently, in order to provide optimum support for the development and growth of many plants the P_{R}/P_{B} ratio between the power radiated in the red spectral band and the power radiated in the blue spectral band is substantially equal to 7/3.

In some cases the optimum P_{R}/P_{B} ratio may be substantially different from 7/3, and may also be less than 1, depending upon the specific requirements of the plants treated, in particular depending upon whether they are sun-loving or shade-loving, and in accordance with their growth environment, for example in air or in water.

If the LED radiating in the red and the LEDs radiating in the blue are controlled in a similar way, so that each is provided with the same power for the same length of time, then the ratio between the number of these LEDs emitting light in the red spectral field and the number of such LEDs emitting light in the blue spectral field will essentially correspond to the optimum P_{R}/P_{B} ratio.

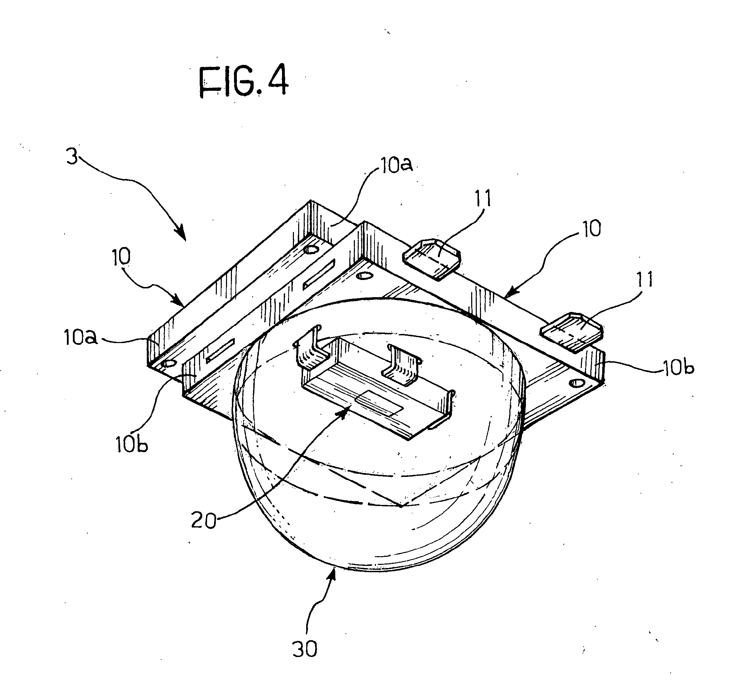

Figure 4 shows an alternative embodiment of a modular radiating element which can be used in an integrated irradiation system according to the invention. In Figure 4 identical or similar parts and members to components already described are again allocated the same numerical or alphanumerical reference numbers.

Modular radiating element 3 illustrated in Figure 4 also comprises a corresponding supporting substrate 10 similar to that described previously.

In the variant according to Figure 4 an emitter device 20 comprising, in one case, a so-called single heterostructure forming two adjacent p-n junctions capable of emitting light with a wavelength around 470 nm and around 655 nm respectively is attached to substrate 10. Device 20 has (at least) three electrical terminals for its power supply and polarisation (bias). This arrangement provides the opportunity for appreciable simplification of the construction of modular radiating elements 3.

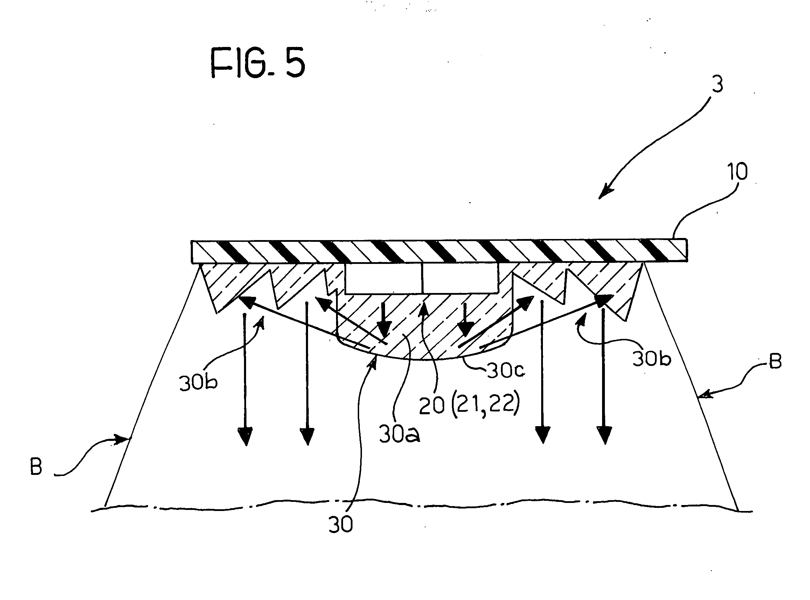

Figure 5 illustrates another modular radiating element 3 which can be used in a system according to the invention, in a diagrammatical and simplified way. Again in this figure parts which are identical to or correspond to parts already described have again been allocated the same numerical reference numbers as used previously.

In radiating element 3 in Figure 5 an optical device 30 operating essentially through reflection is associated with emitter device 20 (or emitter devices 21, 22): the radiation emitted substantially undergoes TIR (total internal reflection) at the boundary surface 30c of a central portion 30a of optical device 30, towards an adjacent portion 30b of the latter which reflects the resulting radiation (downwards for those looking at the figure). Optical device 30 as a whole also mixes the red and blue radiation, and renders the resulting beam of radiation B substantially uniform.

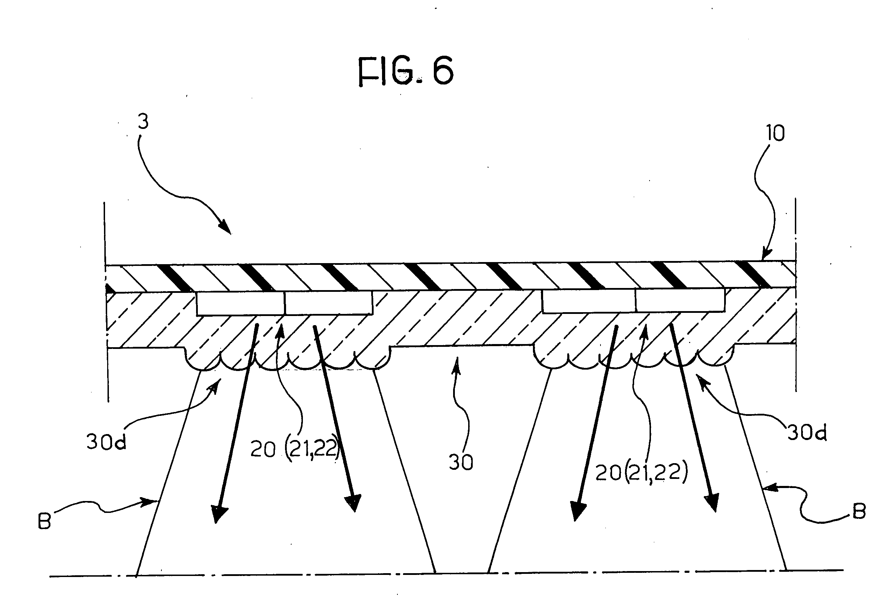

Another modular radiating element 3 which can be used in a system according to the invention is illustrated diagrammatically and in a simplified way in Figure 6. In Figure 6 parts which are identical to or correspond to parts already described are again allocated the same numerical reference numbers as used previously.

Radiating element 3 in Figure 6 comprises (at least) two emitter devices 20 of the type described in relation to Figure 4, or (at least) four individual LEDs 21, 22. However the considerations which follow also apply in the case where radiating element 3 has a single emitter device 20 or a single pair of devices 21, 22.

Radiation emitting devices 20 or 21, 22 in Figure 6 are associated with an optical device 30 essentially operating through transmission, with one or more portions 30d, for example diffractive portions, structured in such a way as to provide a mixing or homogenisation of the red and blue radiation and to render the resulting beam or beams of radiation B substantially uniform.

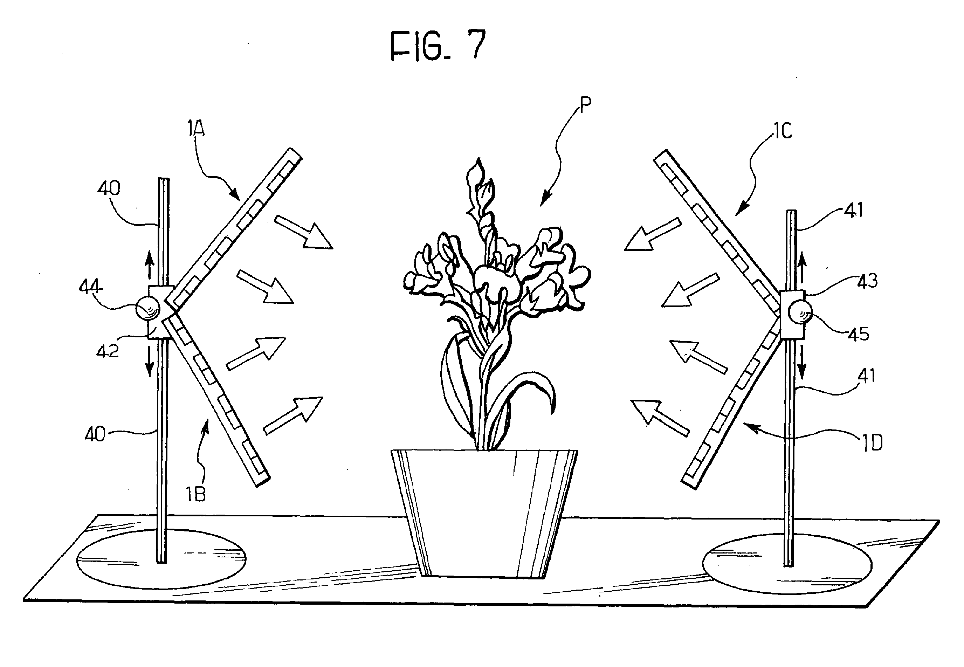

Figure 7 diagrammatically illustrates a configuration of a system according to the invention for the irradiation of plants P. This configuration provides at least one pair of radiating panels 1A and 1B, above and below respectively, supported for example on a single upright or column 40. Panels 1A and 1B, which may be of the type illustrated in Figure 2, are dimensioned and arranged in such a way that upper panel 1A irradiates plant or plants P in a downward direction and lower panel 1B irradiates them in an upward direction.

Preferably another similar pair of radiating panels 1C and 1D is carried by an upright or column 41 opposite panels 1A and 1B with respect to plant or plants P.

The relative arrangement of panels 1C, 1D may be the same as that of panels 1A, 1B, but may also have panel portions and/or inclinations (with respect to the vertical) which differ from those of panels 1A and 1B in order to be able to irradiate the greatest possible surface area of plant or plants P.

Panels 1A, 1B and 1C, 1D may be mounted so as to move vertically along corresponding uprights 40 and 41 by means of corresponding motor devices 42 and 43 which are for example electrically controlled. These devices may also suitably be associated with further motor devices 44 and 45, which are for example electrically controlled, changing the operative inclination of the radiating panels.

The abovementioned motor devices, controlled by a control system (such as that which will be mentioned below), make it possible to "follow" the growth of plants P and adjust their irradiation in an optimum way as they grow.

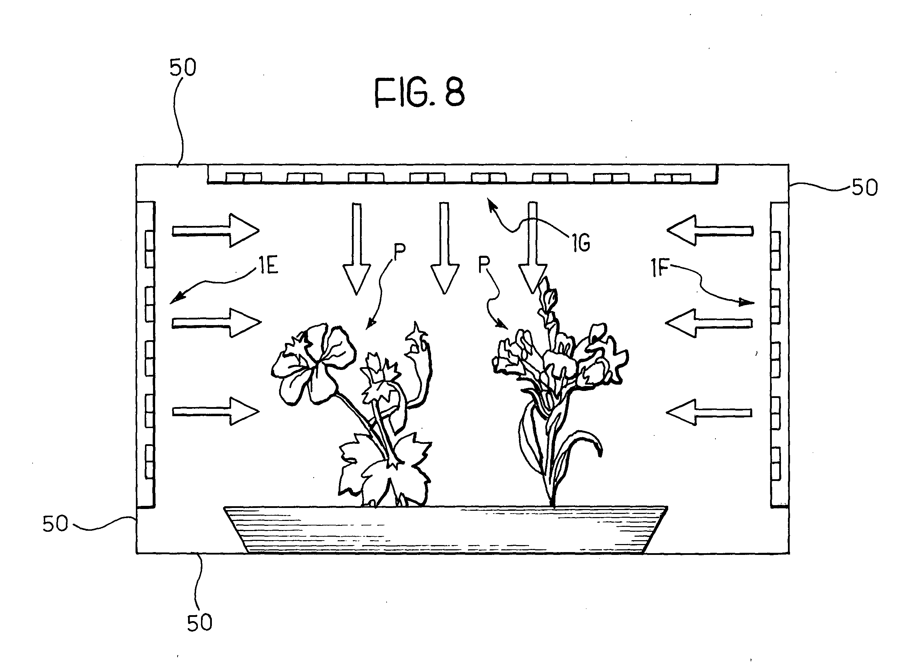

Figure 8 diagrammatically illustrates another configuration of a system according to the invention incorporated in a box 50 for the cultivation of plants P in enclosed environments.

This configuration provides for the use of at least two vertical radiant panels 1E, 1F, for example of the type illustrated in Figure 2, located on opposite sides with respect to plants P being irradiated. The irradiation is provided essentially horizontally.

The said configuration may also comprise (at least) a further upper radiating panel 1G located horizontally above plants P between panels 1E and 1F in order to irradiate the said plants vertically, in a downward direction.

Upper radiating panel 1G may also be of the type in Figure 2, and (like panels 1A-1D described previously) may comprise radiating elements 3 of one or more of the types illustrated in Figures 2 to 5.

The electrical diagram in Figure 9 illustrates by way of example a possible architecture of an interconnection system for modular radiating elements 3 of a dichromatic light generating device 1 according to the invention.

In the diagram in Figure 9 the light emitting diodes 21 of modular radiating elements 3 emitting in the blue spectral region are interconnected in such a way as to form a plurality of branches of diodes in series, these branches being connected to each other in parallel. The parallel connections of these branches are connected between the poles or terminals of a DC power source V, in series with the current limiting resistor 60 and a controlled regulator device 61. In the simplest case the latter may ultimately comprise a transistor, for example one of the MOSFET type.

Similarly, light emitting diodes 22 of modular radiating elements 3 designed to emit light in the red spectral region are connected together in such a way as to form a plurality of branches of diodes in series, these branches then being connected to each other in parallel. The parallel connections of these branches are connected between the poles of the power supply V in series with a current-limiting resistor 70 and a controlled regulator device 71.

Controlled regulator devices 61 and 71 are conveniently controlled by an electronic control unit ECU which includes for example a microprocessor.

This unit may be designed to control the diodes of modular radiating elements 3, for example with a variable duty cycle square wave signal.

Control unit ECU may also possibly be connected with an interfacing device I capable of receiving control signals transmitted by a remote control device RC through a wireless channel and transmitting them to the ECU.

Various electrical sensors, such as an environmental temperature sensor S1, an air humidity sensor S2, a lighting sensor S3 may be connected to control unit ECU. A selection device MS, which is for example manually operated, may also be connected to this ECU.

The ECU may be designed to control emitters 20 or 21, 22 in accordance with means which are predetermined in relation to a plurality of parameters or variables, such as the type of plants which have to be irradiated (selected for example through the MS device), the time of day and the season (identified for example through an internal or external clock in the ECU) and environmental climatic conditions (determined through sensors S1-S3, etc.).

The ECU may therefore for example control the duration and/or amplitude and/or frequency of the radiation pulses generated by emitters 20 or 21, 22, for example in order to "force" the growth of parts of the plant (leaves, stem and roots) and/or the reproductive apparatus (flowers, fruits, seeds) of the irradiated plants.

Control may also be provided independently, and therefore in a diversified way, to the red light emitters and the blue light emitters. In addition to this, in embodiments of the type including a plurality of radiant panels, such as described above with reference to Figures 7 and 8, control may also be differentiated for each panel.

In configurations with motorised mobile radiant panels, as in that according to Figure 7, the ECU may also be designed to effect control of the position or arrangement of each of the radiating panels, controlling the associated motor devices for this purpose, such as those indicated by 42-45 in Figure 7.

This could be done in relation to the growth rhythm of the irradiated plants, possibly monitored by means of television cameras or the like, for example, and/or in relation to natural lighting conditions (position of the sun, etc.), which might also be monitored using appropriate sensors.

The system according to the invention is conveniently suitable for application in both working and research environments, and those of the domestic type, because its configuration and control is highly versatile.

Applications extend from use in controlled growth chambers for plants and algae, to back-up lighting for glasshouses, incorporation in domestic systems for the growth of plants in poorly lit environments, in-vitro cultivation of micropropagated plants, and applications in the space field, such as the provision of cultivation glasshouses in life-support space vehicles or future planetary or satellite settlements.

In addition to this the system may be used for the growth and development of algae (for example Chlorella) and/or other photosynthetic organisms used in water supply purifiers or plants for the disposal of wastewater and the like which are suitable for the purification and/or detoxification of particular polluting agents.

Control of the light emitted offers application in basic and applied research, also for purposes which are not necessarily associated with the field of plant biology, for example, for the investigation of particular phytochemical reactions, the morphogenetic control of fungi and bacteria, etc.

Of course, without altering the principle of the invention the embodiments and details of construction may be varied extensively from what has been described and illustrated purely by way of a non-restrictive example without thereby going beyond the scope of the invention as defined in the appended claims.

## Claims

1. System for the generation of radiant energy to support the development and growth of photosynthetic organisms, in particular plants, comprising
* an ordered two-dimensional array of modular radiant units (3), each of which comprises
- a corresponding supporting substrate (10),
- at least one light emitting unit (20; 21, 22), comprising at least one first and one second emitter (20; 21, 22) capable of emitting light having a predetermined first and second wavelength respectively, and
- an optical device (30) associated with the said at least one light emitting unit (20; 21, 22) capable of imparting a predetermined spatial distribution characteristic to the radiation emitted by at least one such unit;
the said substrate (10) having mechanical and electrical interconnection means (11) to ensure mechanical coupling with the substrates (10) of a plurality of other similar radiant units (3) and connection of the associated at least one light emitting unit (20; 21, 22) with those of the said other radiant units (3) in an electrical power and control system; the system (1) also comprising
* means for the supply of electrical power (V) which can be connected to the said system, and
* control and adjustment means (61, 71; ECU) capable of controlling the transfer of electrical energy from the said supply means (V) to the said system;
the said control and adjustment means (61, 71; ECU) being designed to control the said light emitters (20; 21, 22) in such a way as to vary the flow characteristics of the light emitted from the said first and second emitters (20; 21, 22) in predetermined ways depending upon the values adopted by predetermined environmental parameters and time.

2. System according to Claim 1, in which the said control and adjustment means are designed to control the said light emitters (20; 21, 22) in a pulsed way and to modify the duration and/or amplitude and/or frequency of the light pulses generated in predetermined ways.

3. System according to Claim 1 or 2, comprising selection means (SM) coupled to the control and adjustment means (ECU) capable of providing signals which are selectively indicative of a specific type of organism requiring irradiation in one of a plurality of predetermined types.

4. System according to any one of the preceding claims, in which the said first and second wavelengths lie around 470 nm and around 655 nm respectively.

5. System according to Claim 4, in which the said first and second emitters (20; 21, 22) are capable of emitting light of the first and second wavelength respectively with a FWHM of approximately 20 nm.

6. System according to Claim 4 or 5, in which the said first and second light emitters (20; 21, 22) are of such a number and/or are controlled in such a way that the ratio between the energy irradiated in the spectral field located around 655 nm and the energy irradiated in the spectral field around 470 nm is substantially equal to 7/3.

7. System according to any one of the preceding claims, in which the said optical device (30) is designed to operate essentially through reflection and comprises a first portion (30a) opposite at least one light emitting unit (20; 21, 22) and having a boundary surface (30c) at which radiation emitted from the said at least one unit (20; 21, 22) undergoes total internal reflection towards the second portion (30b) of the said optical device (30) designed to reflect the said radiation in a predetermined direction.

8. System according to any one of the claims from 1 to 6, in which the said optical device (30) is designed to operate substantially through transmission and has at least one diffractive portion (30d) facing at least one emitter unit (20; 21, 22) capable of mixing and transmitting the radiation emitted by the emitters in at least one said unit in a homogenised and diffuse way.

9. System according to any one of the preceding claims, particularly for the irradiation of plants or plant organisms in general, comprising
at least one first and one second array (1A, 1B; 1C, 1D) of radiant units, an upper and a lower respectively, supported in a vertically offset relationship by stationary supporting means (40, 41) constructed and/or arranged in such a way that the upper array (1A; 1C) is suitable for emitting radiation downwards, and the lower array (1B; 1D) is suitable for emitting radiation upwards.

10. System according to Claim 9, in which the said arrays (1A, 1B; 1C, 1D) of radiant units are borne by supporting means (40; 41) in positions and/or orientations which can be altered.

11. System according to Claim 10, in which motor means (42-45) which can be controlled by the said control and adjustment means (ECU) and which are suitable for changing the position and/or orientation of the said arrays are associated with the said arrays (1A, 1B; 1C, 1D) of radiant units.

12. System according to any one of the preceding claims, also comprising remote control (RC) means, preferably of the wireless type, to control the aforesaid supply means (V) and/or the associated control and adjustment means (61, 71; ECU).
